# EUROPÄISCHE PATENTSCHRIFT

(11) **EP 1 274 198 B1**
(45) Veröffentlichungstag und Bekanntmachung des Hinweises auf die Patenterteilung: **06.04.2005**
(21) Anmeldenummer: 02100741.4
(22) Anmeldetag: 21.06.2002
(51) Int. Cl.: H04L 12/24, H04L 29/12

(54) **Verfahren und Anordnung zur Konfiguration eines Kommunikationsverbundes**
Method and system for configuring interconnected communication networks
Procédé et appareil pour la configuration de réseaux de communication interconnectés

(30) Priorität: 04.07.2001 DE 10132272
(43) Veröffentlichungstag der Anmeldung: 08.01.2003
(73) Patentinhaber: SIEMENS AKTIENGESELLSCHAFT, 80333 München (DE)
(72) Erfinder: Schwartze, Jürgen, 58239 Schwerte (DE)

(56) Entgegenhaltungen:
- EP-A- 0 946 027
- EP-A- 1 081 921
- WO-A-00/79738
- STEVENS W.R.: 'TCP/IP Illustrated', Bd. 1, ADDISON WESLEY, 1994 * Seite 60 - Seite 62 *

## Beschreibung

Die Erfindung betrifft ein Verfahren zur Konfiguration, insbesondere zur Erstkonfiguration, eines Kommunikationsverbundes zur Übertragung von Sprach- und/oder Nutzdaten nach dem Oberbegriff des Anspruches 1. Die Erfindung betrifft weiterhin eine Anordnung zur Durchführung des Verfahrens nach dem Oberbegriff des Anspruches 6.

Werden in einem Datennetz Netzkomponenten (Datenendgeräte) miteinander verbunden, die von der räumlichen Anordnung her in einem Gebäude bzw. auf dem Gelände eines Unternehmens installiert sind, wird ein solches Netzwerk in der Literatur als LAN (Lokal Area Network) bezeichnet. Hierbei nimmt bei großen Netzwerken (LANs) die Anzahl der gemeinsam benutzten Ressourcen (Festplatten, Dateien, Druckern, Kommunikationsservern, Gateways usw.) sehr schnell zu, woraus sich für das Netzwerk ein hoher Verwaltungsaufwand ergibt. Die gemeinsam benutzten Ressourcen müssen übersichtlich dargeboten werden, damit das Netz den Benutzern ihre Arbeit erleichtert.

Dieses Problem läßt sich nur durch eine logische Verwaltungsstruktur lösen. Generell existieren dazu bei den aktuellen Netzwerkbetriebssystemen die zwei unterschiedlichen Lösungsansätze der Direrctory Services (Novell Network) und der Domains (Windows NT Server, IBM LAN Manager). Grundsätzlich gilt bei allen Unixvarianten (Derivaten) wie SCO Unix, Solaris, IBM AIX, HPUX oder Linux, daß die Netzwerkfähigkeit bereits in den Kern des Systems integriert ist. Dies gestattet sowohl den Aufbau eigener Netzwerke als auch die Verbindung zu anderen Servern.

Um sämtliche in einem Netzwerk eingesetzten Datennetzwerke bzw. Geräteeinheiten eindeutig identifizieren zu können, werden ihnen jeweils bestimmte Adressen zugeordnet, die als Knoten oder Nodes bezeichnet werden. Die Knotenadressen sind in der Regel auf den verwendeten Netzwerkkarten (Interfaces) fest eingetragen und weltweit eindeutig. Sie werden an einer zentralen Stelle verwaltet, wozu jedem Hersteller solcher Netzwerkkarten ein bestimmtes Kontingent an Nummern zur Verwendung zugewiesen wird. Für Ethernet-Netzwerkkarten wird eine 48-Bit-MAC-Adresse (Media Access Control) angegeben, welche die eindeutige Identifizierung eines Interfaces ermöglicht.

Zur sinnvollen Strukturierung eines LAN unter dem Gesichtspunkt einfacher Verwaltbarkeit oder Zuordnung von Netzkomponenten zu bestimmten Arbeitsgruppen oder -projekten werden bei der Konfiguration, insbesondere bei der Erstkonfiguration eines LANs, den einzelnen Netzkomponenten IP-Adressen vergeben, welche diese in einer Domain oder Subdomain eindeutig identifizieren und eine Kommunikation zwischen diesen z.B. auf der Basis des TCP/IP-Protokolls ermöglichen. Üblicherweise werden die einzelnen Netzkomponenten nicht direkt vor Ort eingerichtet, was einen erheblichen personellen und zeitlichen Aufwand bedeuten würde, sondern per Fernsteuerung ("Remote") von einem Administrationsserver - auf dem im Regelfall das Neztwerkbetriebssystem abläuft.

Heutige Netzwerkbetriebssysteme bieten dafür dem Netzwerkadministrator eine umfangreiche Auswahl von Funktionalitäten, wie z.B. bei Novell Netware den IVWADMIN, IVWUSER, SYSCONW usw., mit denen die Integration neuer Netzkomponenten (Erstkonfiguration) sowie die Verwaltung von Benutzern, Speichermedien, Druckern usw. unter einer graphischen Oberfläche möglich ist. Zur Konfiguration von Netzkomponenten in einem (E-thernet-)LAN nutzen die entsprechenden Dienstprogramme zur Verwaltung des Netzwerks Standardfunktionalitäten, wie (Proxy-)ARP (Adress Resolution Protocol) zur Erkennung der einer IP-Adresse zugeordneten MAC-Adresse. Umgekehrt wird bei RARP (Reverse Adress Resolution Protocol) die IP-Adresse zu einer MAC-Adresse erkannt. Plattenlose Systeme, wie z.B. X-Terminals oder plattenlose Workstations, laden ihr Betriebssystem über das Netzwerk von einem Betriebssystemserver, wobei sie zunächst mittels BOOTP (Boot Strap Protocol) eine ihrer MAC-Adresse zugeordnete IP-Adresse anfordern.

Innerhalb der Firmen und Organisationen gewinnen strukturierte Kommunikationsnetze immer mehr an Bedeutung, mit denen Daten aller Art an den gewünschten Adressaten übermittelt werden.

Auch die "Telefonie per Internet" (IP-Telefonie) über die Intranets der Unternehmen oder Organisationen spielt eine immer wichtigere Rolle. Dies setzt allerdings die Kopplung vorhandener und möglicherweise weiträumig voneinander getrennter LANs über Fernverbindungen zu einem WAN (Wide Area Network) voraus. Problematisch dabei ist nicht nur eine eventuelle Heterogenität der gekoppelten Netzwerke durch verschiedene physische Übertragungsmedien, Netzwerkarchitekturen (BUS oder Token Ring), Protokollarten und Betriebssysteme, sondern auch die Konfiguration und Verwaltung, insbesondere die Erstkonfiguration, solcher Kommunikationsverbände.

Üblicherweise wird eine Kopplung zweier LANs mittels einer Punkt-zu-Punkt-Verbindung zwischen einer primären Netzkomponente (Gateway, Router) mit direkter Anbindung an ein LAN und einer sekundären Netzkomponente mit direkter Anbindung an das zweite LAN realisiert. Auf dieser Punkt-zu-Punkt-Verbindung kommen Übertragungsprotokolle wie das PPP (Point to Point Protocol) oder SLIP (Serial Line Internet Protocol) zum Einsatz. Die primäre Netzkomponente mit direktem Zugriff auf das Datennetz wird in solchen Anordnungen üblicherweise mit einer sogenannten Proxy-Fähigkeit - Proxy-ARP im TCP/IP-Umfeld - versehen. Gemäß R. Stevens TCP/IP Illustrated, Volume 1 - The Protocols", Addison-Wesley, 1994, ISBN 0-201-63346-9, Kapitel 4.6 zeichnet sich eine Netzwerkkomponente mit Proxy-Fähigkeit dadurch aus, dass sie neben sich selbst auch andere Einheiten im Netzwerk konform zu dem verwendeten Netzwerkprotokoll - beispielsweise dem ARP-Protokoll - repräsentiert.

Während die primäre Komponente mit den jeweiligen Mechanismen des Datennetzes, wie RARP oder BOOTTP bei TCP/IP, automatisch erstkonfiguriert werden kann, ist ein solcher Automatismus für die indirekt angebundenen Netzkomponenten (sekundäre Netzkomponenten) nicht verfügbar. Eine einfache Erstkonfiguration eines derart gestalteten Kommunikationsverbundes läßt also ein Erreichen der sekundären Netzkomponenten aus einem Netzwerk nicht zu.

Zwar können die Zugangsparameter jeder Netzkomponente ohne direkten Zugang zum Netzwerk proprietär, d. h. manuell und direkt am Gerät, für die Anbindung an das Netzwerk konfiguriert werden. Dies ist aber gerade bei WANs mit zum Teil erheblicher räumlicher Ausdehnung zeitintensiv und unwirtschaftlich. Eine andere Möglichkeit besteht darin, eine sogenannte Defaultkonfiguration der Netzkomponenten ohne direkten Zugang zum Datennetz vorzugeben. Dabei entsteht allerdings das Problem, daß ein Kommunikationsverbund dann nicht mehrere Netzkomponenten des gleichen Typs enthalten darf, weil eine Eindeutigkeit in der Adressierung nicht mehr gegeben wäre.

Aus der deutschen Offenlegungsschrift DE 199 42 465 A1 ist ein Verfahren zur Vergabe von IP-Adressen in Kommunikationsnetzen bekannt. Das Kommunikationsnetz umfasst dabei einen Konfigurationsrechner, mehrere Netzkoppeleinrichtungen und an die Netzkoppeleinrichtungen angeschlossene Teilnehmereinrichtungen. Gemäß dem Verfahren erfolgt in einem ersten Schritt eine Konfiguration der Netzkoppeleinrichtungen und in einem zweiten Schritt eine Konfiguration der Teilnehmereinrichtungen. Beispielhaft wird der erste Switch mittels einer Datenübertragung D1 konfiguriert, d.h. beispielsweise mit seiner IP-Adresse versorgt. Anschließend erfasst der erste Switch alle Ethenet-Adressen der an ihn angeschlossenen Teilnehmereinrichtungen mit der jeweiligen Zuordnung zum Port und sendet diese mittels eines Datenpaketes D3 an den Konfigurationsrechner. Erst nach Erhalt des Datenpaketes D3 überträgt der Konfigurationsrechner die IP-Adressen mittels der Übertragung D2 an die Teilnehmereinrichtungen.

Des weiteren ist aus der europäischen Offenlegungsschrift EP 946 027 A2 ein Verfahren zur Konfigurierung von Netzwerkknoten bekannt, bei dem die Netzknoten derart konfiguriert werden, dass sie ihr eigenes Default-Gateway sind.

Es ist Aufgabe der vorliegenden Erfindung, ein Verfahren und eine Anordnung bereitzustellen, welche eine einfache Konfiguration, insbesondere Erstkonfiguration, zur Integration von primären und sekundären Netzkomponenten in ein Datennetz mittels Remote-Zugriff zuläßt.

Diese Aufgabe wird durch ein Verfahren mit den Verfahrensschritten a) Definieren einer Config Message als Konfigurations-IP-Paket auf dem Administrationssever; b) Übermitteln der Config Message zur primären Netzkomponente mit Proxy-Eigenschaft; c) selbsttätiges Konfigurieren der primären Netzkomponente mittels Config Message; d) Weiterleiten der Config Message an wenigstens eine sekundäre Netzkomponente; und e) selbsttätiges Konfigurieren der wenigstens einen sekundären Netzkomponente bezüglich ihres Zuganges zum Daten-. netz über die primäre Netzkomponente gelöst.

Ein wesentliches Element der Erfindung ist die Definition der Config Message, welche von einem Administrationsrechner im Datennetz zur primären Netzkomponente geschickt wird, jedoch alle relevanten Konfigurationsparameter für den Datennetzzugang der primären und aller zugeordneten sekundären Netzkomponenten enthält. Dabei werden die vorhandenen, dem Stand der Technik entsprechenden Mechanismen zur Erstkonfiguration einer Komponente mit direktem Zugang zum Datennetz erweitert, um diese Komponente zu veranlassen, einerseits ihre Proxy-Funktionalität automatisch aufzunehmen und andererseits auch die an sie angeschlossenen Komponenten ohne direkten Datennetzzugang zur automatischen Selbstkonfiguration ihres Zugangs zum Datennetz zu veranlassen.

Ein wesentlicher Vorteil liegt darin, daß die einfachen Standardmechanismen in ihrer Funktionalität voll erhalten bleiben und im Stand-Alone-Betrieb einer Netzkomponente ohne Proxy-Aufgaben uneingeschränkt weiter verwendbar sind. Ein Administrator wird nun in die Lage versetzt, mit minimalem Mehraufwand gegenüber einer automatischen Ersteinrichtung einer Einzelkomponente nun einen Verbund aus einer direkt erreichbaren Netzkomponente mit Proxy-Fähigkeit und einer oder mehreren weiteren, nur über den Proxy erreichbaren Netzkomponenten einzurichten. Damit gestaltet sich das Vorgehen bei der Erstkonfiguration eines solchen Verbundes für den Anwender einfacher, transparenter und schneller bzw. wird von Remote erst ermöglicht.

Vorteilhafte Weiterbildungen des erfindungsgemäßen Verfahrens sind in den Unteransprüchen 2 bis 5 angegeben.

In bevorzugter Weise werden die Schritte a) bis e) auf der Basis erweiterter Standardkonfigurationskomponenten, insbesondere auf Basis RARP oder BOOTP, ausgeführt. Damit werden dem erfindungsgemäßen Verfahren Konfigurationskomponenten zugrundegelegt, welche im Bereich des Ethernet und Token-Ring-Zugriffsverfahrens standardmäßig vorhanden sind. Der Einsatzbereich des Verfahrens ist somit nicht auf sehr spezielle Netzwerktypen und Übertragungsprotokolle eingeschränkt, da insbesondere das TCP/IP-Protokoll auf Basis Ethernet oder Token Ring am weitesten verbreitet ist.

Von besonderem Vorteil ist weiterhin, daß in Schritt b) des erfindungsgemäßen Verfahrens die Config Message an mehrere primäre Netzkomponenten gleichzeitig oder zeitlich nacheinander vorgenommen werden kann. Insbesondere bei der Erstkonfiguration eines Datennetzes mit primären und sekundären Netzkomponenten können von einem Netzwerkadministrator zunächst alle relevanten Konfigurationsdaten zur Kopplung einer oder mehreren primären Netzkomponenten mit entsprechend einer oder mehrerer sekundärer Netzkomponenten zusammengetragen werden. Die Einrichtung der Netzkomponenten und damit die Kopplung möglicherweise mehrerer Datennetze kann dann mittels Remote-Zugriff ohne größeren Aufwand in einem Schritt erfolgen. Dies kann nicht nur für die Erstkonfiguration eines Datennetzes von Vorteil sein, sondern auch für die Neukonfiguration durch Umstrukturierung oder Fusion eines Unternehmens mit in der Folge weiteren an das Datennetz zu koppelnden Niederlassungen oder Produktionsstätten.

In besonders bevorzugter Weise wird das selbsttätige Konfigurieren der primären Netzkomponente im oben erwähnten Schritt c) unter Ausführung der Schritte c1) Auslesen der Konfigurationsdaten aus der Config Message; c2) Erkennen der Konfigurationsdaten, welche der primären Netzkomponente zugeordnet sind; c3) Inbetriebnehmen eines IP-Interfaces und wenigstens eines Proxy-Interfaces und c4) Schreiben wenigstens einer Proxy-Interface-ID in die Config Message durchgeführt. Die primäre Netzkomponente kann anhand der Ethernet-Adresse ihrer Netzwerkkarte die für sie bestimmte Config Message erkennen und die ihr zugeordneten Konfigurationsdaten identifizieren. Mit diesen Daten nimmt die primäre Netzkomponente daraufhin sowohl ihr eigenes IP-Interface als auch die Proxy-Interfaces in Betrieb. Die jeweilige Proxy-Interface-ID wird zur Auswertung durch die sekundäre Netzkomponente in die Config Message geschrieben, um eine Verbindung zwischen der sekundären Netzkomponente und der primären Netzkomponente zu ermöglichen.

In bevorzugter Weise wird das selbsttätige Konfigurieren der wenigstens einen sekundären Netzkomponente in Schritt e) unter Durchlaufen der Schritte e1) Auslesen der Konfigurationsdaten aus der Config Message; e2) Erkennen der Konfigurationsdaten, welche der jeweiligen sekundären Netzkomponente zugeordnet sind; und e3) Inbetriebnehmen des IP-Interfaces durchgeführt. Anhand der zugeordneten Proxy-Interface-ID der primären Netzkomponente erkennt die sekundäre Netzkomponente die ihr zugeordneten Konfigurationsdaten, welche zur Inbetriebnahme ihres IP-Interfaces genutzt werden soll. Beim selbsttätigen Konfigurieren der primären wie auch der sekundären Netzkomponente löst dabei das Eintreffen der Config Message den Konfigurationsvorgang mit den beschriebenen Schritten aus. Ein manuelles Eingreifen des Netzwerkadministrators am System vor Ort ist damit nicht mehr notwendig.

Nach Inbetriebnahme der IP-Interfaces von primären und sekundären Netzkomponenten, also nach dem Durchlaufen des Schrittes e) des erfindungsgemäßen Verfahrens, werden in bevorzugter Weise weitere netzwerkübergreifende Konfigurationsmaßnahmen mit den üblichen Werkzeugen, insbesondere mittels Remote-Zugriff durchgeführt. Durch die nunmehr mögliche Erreichbarkeit der sekundären Netzkomponenten über die primären Netzkomponenten ist die Verwendung von Applikationen wie Telnet (Remote-Terminal-Acces), FTP (File Transfer Protocol), SNMP (Simple Network Management Protocol), DNS (Domainname System) oder NFS (Network File System) zur vollständigen Erstadministration über das Datennetz per Remote-Zugriff möglich.

Die Aufgabe der vorliegenden Erfindung wird auch durch eine Anordnung zur Durchführung des beschriebenen Verfahrens gelöst, welche ein auf dem Administrationsserver ablaufendes, interaktiv bedienbares Administrationsprogramm zur Vorgabe von Konfigurationsdaten für primäre und sekundäre Netzkomponenten umfaßt. Sie weist weiterhin ein auf der primären Netzkomponente ablaufendes erstes Konfigurationsprogramm zum selbsttätigen Konfigurieren der primären Netzkomponente und ein auf der wenigstens einen sekundären Netzkomponente ablaufendes zweites Konfigurationsprogramm zum selbsttätigen Konfigurieren der sekundären Netzkomponente auf.

Das Administrationsprogramm sowie das erste und zweite Konfigurationsprogramm für die primäre bzw. sekundäre Netzkomponente bauen dabei auf bekannten Standardmechanismen der Netzwerkschicht (Layer 3 des OSI Referenzmodelles) wie ARP (Adress Resolution Protocol) auf. Diese nehmen, durch entsprechende Erweiterungen die Netzkomponente mit direktem Zugang zum Datennetz veranlaßt, einerseits ihre Proxy-Funktionalität automatisch auf und veranlassen andererseits auch die an sie angeschlossenen Netzkomponenten ohne direkten Datennetzzugang zur automatischen Selbstkonfiguration ihres Zuganges zum Datennetz. Das Konfigurationsprogramm der primären Netzkomponente mit Proxy-Funktionalität sendet dabei die Config Message an alle angeschlossenen sekundären Netzkomponenten weiter ("Config Message Forwarding").

Vorteilhafte Weiterbildungen der erfindungsgemäßen Anordnung sind in den Unteransprüchen 7 bis 12 angegeben.

Bevorzugt umfaßt das Administrationsprogramm Mittel zur Eingabe von Konfigurationsdaten einer primären und wenigstens einer sekundären Netzkomponente durch den Nutzer; Mittel zum Erstellen einer Config Message, welche die Konfigurationsdaten enthält, und Mittel zum Senden der Config Message an die sekundäre Netzkomponente. Die Mittel zur Eingabe von Konfigurationsdaten können dabei sowohl die Eingabe im Comandline-Modus wie auch die Eingabe in eine interaktive graphische Oberfläche (Wizard) beinhalten. Die Mittel zur Eingabe, zum Erstellen und zum Senden der Config Message des Administrationsprogramms können in Form eines geschlossen ablauffähigen Programmes und/oder in Form z.B. eines Unix-Shellscripts vorliegen.

Das Aufbauformat der Config Message ist in bevorzugter Weise so ausgestaltet, daß dadurch die primäre Netzkomponente einerseits zum selbsttätigen Konfigurieren und andererseits zum Weiterleiten der Config Message aktiviert wird. Dabei kann an der entsprechenden Position oder durch eine entsprechende Kennzeichnung der Konfigurationsdaten im Aufbauformat der Config Message eine Zuordnung zur primären Netzkomponente mit der zusätzlichen Aktivierung des Config Message Forwarding vorgenommen werden.

Zur selbsttätigen Konfiguration der primären und sekundären Netzkomponenten weisen in bevorzugter Weise die Konfigurationsdaten der Config Message die Meldungselemente Ethernet-Adresse der primären Netzkomponente, IP-Adresse der primären Netzkomponente, IP-Adresse wenigstens einen sekundären Netzkomponente, gemeinsame Subnetzmaske und Default-Gateway auf. Damit stehen alle notwendigen Konfigurationsdaten zur Anbindung von mit einer primären Netzkomponente verbundenen sekundären Netzkomponenten an ein gemeinsames Datennetz zur Verfügung.

Eine derart gestaltete Config Message wird von dem ersten Konfigurationsprogramm in erster Linie zur selbsttätigen Konfiguration verwendet, wofür Mittel zum Lesen der Config Message, Mittel zum Erkennen der Konfigurationsdaten, welche der primären Netzkomponente zugeordnet sind, und Mittel zum Inbetriebnehmen des IP-Interfaces und des wenigstens einen Proxy-Interfaces der primären Netzkomponente vorgesehen sind. Weiterhin sind Mittel zum Schreiben wenigstens einer Proxy-Interface-ID in die Config Message und Mittel zum Senden der Config Message (Config Message Forwarding) an wenigstens eine sekundäre Netzkomponente Teil des Konfigurationsprogramms der primären Netzkomponente. Alle hier vorgestellten Mittel können sowohl in Form eines geschlossenen ablauffähigen Programmes und/oder z.B. in Form eines Unix Shellscripts verwirklicht sein.

Auch das zweite Konfigurationsprogramm zur selbsttätigen Konfiguration der sekundären Netzkomponente weist in bevorzugter Weise Mittel zum Lesen der Config Message, Mittel zum Erkennen der Konfigurationsdaten, welche der jeweiligen sekundären Netzkomponente zugeordnet sind und Mittel zum Inbetriebnehmen des IP-Interfaces der jeweiligen sekundären Netzkomponente auf. Im Zusammenhang mit dem spezifischen Aufbauformat der Config Message erkennt das zweite Konfigurationsprogramm anhand der vom ersten Konfigurationsprogramm geschriebenen Proxy-Interface-ID, welche Konfigurationsdaten der sekundären Netzkomponente zugeordnet sein sollen. Auch hier können die beschriebenen Mittel des zweiten Konfigurationsprogramms in Form eines in sich geschlossenen ablauffähigen Programms und/oder z.B. als Unix Shellscript verwirklicht sein.

In bevorzugter Weise werden für das Administrationsprogramm und/oder das erste Konfigurationsprogramm und/oder das zweite Konfigurationsprogramm standardisierte Konfigurationskomponenten, insbesondere RARP und BOOTP, verwendet. Damit wird die Ablauffähigkeit einer solchen Kette von nacheinander aufgerufenen Programmen auf allen Rechnersystemen mit TCP/IP-Kopplung auf Basis des Ethernet-Zugriffs möglich.

Im folgenden wird die Erfindung anhand von Ausführungsbeispielen näher erläutert.

Dabei zeigen:
- Fig. 1:: einen Administrationsserver 100, über welchen eine primäre Netzwerkkomponente 200 und zwei weitere mit der primären verbundene sekundäre Netzkomponenten 300, 400 administriert werden, und
- Fig. 2:: eine Übersicht über die verwendeten Meldungselemente der Konfigurationsdaten und ihre Verwendung.

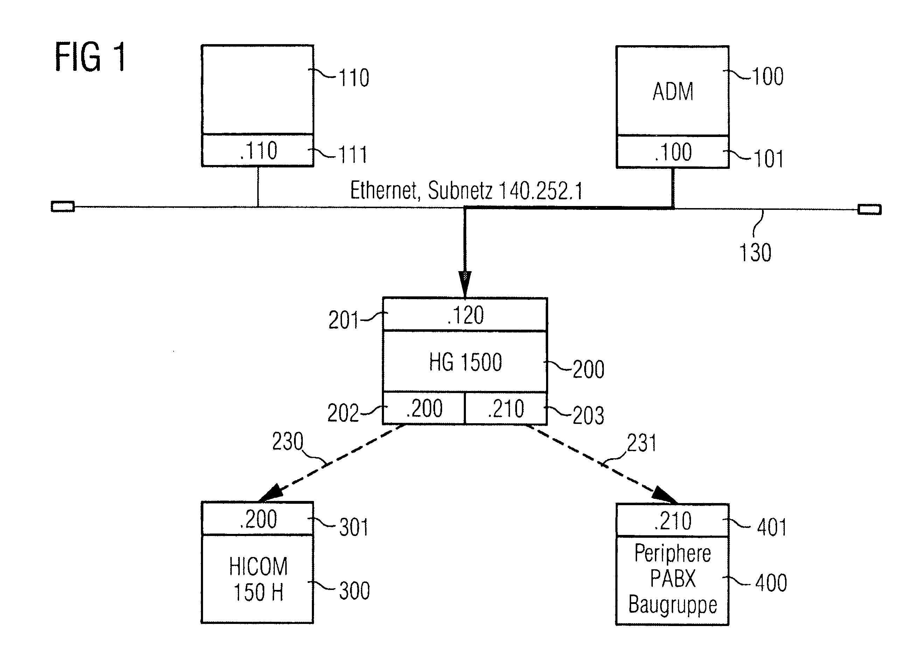

Die Fig. 1 zeigt eine Integration des erfindungsgemäßen Verfahrens und einer Anordnung zur Durchführung dieses Verfahrens ausschnittsweise in einen derzeit in der Entwicklung befindlichen Telekommunikationsverbund auf Basis des Hicom 150 H PABX Systems. Zu erkennen ist ein Administrationsserver 100, welcher über ein Ethernet-Interface (eine Ethernet-Netzwerkkarte) 101 direkt mit einem Subnet 130 mit der Netzkennung 140.252.1 direkt verbunden ist. Der Administrationsserver 100 wird dabei unter der IP-Adresse 140.252.1.100 angesprochen.

An den Ethernet 130 ist weiterhin ein z.B. Datenbankserver 110 mit einem Ethernet-Interface 111, welches die IP-Adresse 140.252.1.110 trägt, angeschlossen. Direkt verbunden mit dem Ethernet 130 ist auch eine primäre Netzkomponente (Proxy) 200 mit einem Ethernet-Interface 201, welches unter der IP-Adresse 140.252.1.120 adressiert ist. Bei der primären Netzkomponente 200 handelt es sich um eine LAN-Baugruppe HG 1500, welche zum einen als Gateway zum Ethernet 130 fungiert, zum anderen über Proxy-Interfaces 202 und 203 als Router über Punkt-zu-Punkt Datenleitungen 230 und 231 mit sekundären Netzkomponenten 300 und 400 über deren Punkt-zu-Punkt Interfaces 301 und 401 verbunden ist.

In der gezeigten Ausführungsform handelt es sich bei der sekundären Netzkomponente 300 um eine Hicom 150 PABX Nebenstellenanlage, an welche z.B. Telefoneinrichtungen angeschlossen sein können. Die primäre Netzkomponente 200 arbeitet dabei als Proxy für die dahinter liegende Hicom 150 PABX und eine weitere sekundäre Netzkomponente 400, z. B. eine periphere PABX-Baugruppe. Die Erstkonfiguration einer solchen Anordnung erfolgt dann derart, daß im Default (Ersthochlauf des Systems) die primäre Netzkomponente 200 über ihre feste, eindeutige Ethernet-Adresse (MAC-Adresse) verfügt, nicht jedoch über eine IP-Adresse.

Der Netzwerkadministrator gibt in einem auf dem Administrationsserver 100 laufenden Administrationsprogramm folgende Daten ein:
- Ethernet-Adresse (MAC-Adresse) der primären Komponente 200 (HG 1500), welche auf das Gerät aufgedruckt ist;
- IP-Adresse der primären Komponente 200 (HG 1500);
- IP-Adresse der Komponenten 300 (Hicom 150H) und 400 (weite sekundäre Netzkomponente);
- gemeinsame Subnetzmaske für die IP-Interfaces 201, 301 und 401;
- Default-Gateway des IP-Netzes, welches z. B. die IP-Adresse der primären Netzkomponente 200 sein kann, sofern diese IP-Routing beherrscht.

Das Administrationsprogramm (Wizard) generiert daraus ein Konfigurations-IP-Paket ("Config Message") und sendet es zur primären Komponente 200. Diese nimmt ihr eigenes IP-Interface 201 sowie die Proxy-Interfaces 202 und 203 für die sekundären Netzkomponenten 300 und 400 in Betrieb. Dann trägt sie die Proxy-Interface-ID (MAC-Adresse) in die Config Message ein und leitet sie auf proprietärem Weg, also nicht über das Datennetz, sondern in diesem Fall über die seriellen Datenleitungen 230 und 231 (V.24), an die sekundären Komponenten 300 und 400 weiter. Diese verwenden die Daten der primären Komponente 200, also des Proxys, als ihr Default-Gateway.

Damit ist die primäre Netzwerkkomponente 200 und sind die beiden sekundären Netzkomponenten 300 und 400 konfiguriert und von dem Administrationsserver 100 mit ihren zugeordneten IP-Adressen ansprechbar. Erstkonfigurationen vor Ort an der entsprechenden sekundären Netzkomponente 300 oder 400 sind damit überflüssig, die gezeigte Anordnung kann allein von dem Administrationsserver 100 mittels Remote-Zugriff erstkonfiguriert werden. Auf den seriellen Datenleitungen 230 und 231 kann dabei entweder PPP (Point to Point Protocol) oder das SLIP (Serial Line Internet Protocol) angewendet werden.

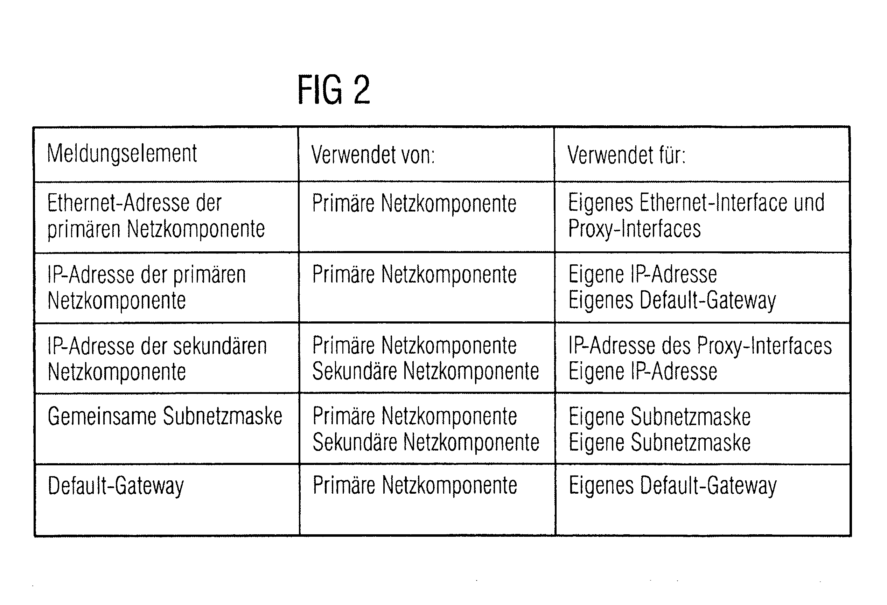

Die Fig. 2 zeigt eine Übersicht über die Meldungselemente der Konfigurationsdaten und ihre Verwendung. Bei der Erstkonfiguration einer Anordnung nach Fig. 1 wird die Ethernet-Adresse (MAC-Adresse) der primären Netzkomponente 200 von dieser für die Einrichtung und Inbetriebnahme des eigenen Ethernet-Interfaces 201 und der Proxy-Interfaces 202 und 203 verwendet. Die IP-Adressen der primären Netzkomponente 200 wird von dieser als eigene IP-Adresse 140.252.1.120 und gegebenenfalls als eigenes Default-Gateway verwendet. Die IP-Adresse der sekundären Netzkomponenten 300 und 400 werden von der primären Netzkomponente 200 als IP-Adresse der Proxy-Interfaces 202 und 203 sowie von den sekundären Netzkomponenten 300 und 400 als eigene IP-Adresse 140.252.1.200 und 140.252.1.210 verwendet. Die gemeinsame Subnetzmaske des Ethernet 130, z. B. 255.255.255.0 im Falle der Netzerkennung 140.252.1, wird von der primären Netzkomponente 200 als eigene Subnetzmaske und von den sekundären Netzkomponenten 300 und 400 ebenfalls als eigene Subnetzmaske verwendet. Für die primäre Netzkomponente 200 gilt das Default-Gateway 140.252.1.120 als eigenes Default-Gateway.

An dieser Stelle sei darauf hingewiesen, daß alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

## Patentansprüche

1. Verfahren zur Konfiguration eines Kommunikationsverbundes zur Übertragung von Sprach- und/oder Nutzdaten, mit
- einem an einem Datennetz direkt angeschlossenen Administrationsserver (100);
- einer an diesem Datennetz ebenfalls direkt angeschlossenen primären Netzkomponente (200) mit Proxy-Eigenschaft, und
- wenigstens einer über die primäre Netzkomponente (200) indirekt an das Datennetz angeschlossenen sekundären Netzkomponente (300, 400),
mit folgenden Verfahrensschritten:
a) Definieren einer die Konfigurationsparameter für einen Datennetzzugang der primären und der sekundären Netzkomponenten (200; 300, 400) enthaltenden Config Message als Konfigurations-IP-Paket auf dem Administrationsserver (100);
b) Übermitteln der Config Message zur primären Netzkomponente (200) mit Proxy-Eigenschaft;
c) Selbsttätiges Konfigurieren der primären Netzkomponente (200) mittels der Config Message;
d) Weiterleiten der Config Message an wenigstens eine sekundäre Netzkomponente (300, 400) und
e) Selbsttätiges Konfigurieren der wenigstens einen sekundären Netzkomponente (300, 400) bezüglich ihres Zuganges zum Datennetz über die primäre Netzkomponente (200), wobei die Daten der primären Netzkomponente (200) als Default-Gateway für die sekundäre Netzkomponente (300, 400) verwendet werden.

2. Verfahren nach Anspruch 1,
**dadurch gekennzeichnet, daß**
die Schritte a) bis e) auf Basis erweiterter Standard-Konfigurationskomponenten wie RARP oder BOOTP ausgeführt werden.

3. Verfahren nach Anspruch 1 oder 2,
**dadurch gekennzeichnet, daß**
in Schritt b) die Config Message an mehrere primäre Netzkomponenten (200) gleichzeitig oder zeitlich nacheinander übermittelt wird.

4. Verfahren nach einem der vorhergehenden Ansprüche,
**dadurch gekennzeichnet, daß**
das selbsttätige Konfigurieren der primären Netzkomponente (200) in Schritt c) die Schritte
c1) Auslesen der Konfigurationsdaten aus der Config Message;
c2) Erkennen der Konfigurationsdaten, welche der primären Netzkomponente (200) zugeordnet sind;
c3) Inbetriebnehmen eines IP-Interfaces (201) und wenigstens eines Proxy-Interfaces (202, 203) und
c4) Schreiben wenigstens einer Proxy-Interface-ID in die Config Message
aufweist.

5. Verfahren nach einem der vorhergehenden Ansprüche,
**dadurch gekennzeichnet, daß**
das selbsttätige Konfigurieren der wenigstens einen sekundären Netzkomponente (300, 400) in Schritt e) die Schritte
e1) Auslesen der Konfigurationsdaten aus der Config Message;
e2) Erkennen der Konfigurationsdaten, welche der jeweiligen sekundären Netzkomponente (300, 400) zugeordnet sind, und
e3) Inbetriebnehmen des IP-Interfaces (301, 401)
aufweist.

6. Anordnung zur Durchführung des Verfahrens nach einem der vorhergehenden Ansprüche, mit
- einem an einem Datennetz direkt angeschlossenen Administrationsserver (100);
- einer an diesem Datennetz ebenfalls direkt angeschlossenen primären Netzkomponente (200) mit Proxy-Eigenschaft und
- wenigstens einer über die primäre Netzkomponente (200) indirekt an dem Datennetz angeschlossenen sekundären Netzkomponente (300, 400),
**gekennzeichnet durch**
- ein auf dem Administrationsserver (100) ablaufendes, interaktiv bedienbares Administrationsprogramm zur Vorgabe von Konfigurationsdaten für primäre (200) und sekundäre Netzkomponenten (300, 400);
- ein auf der primären Netzkomponente (200) ablaufendes erstes Konfigurationsprogramm zum selbsttätigen Konfigurieren der primären Netzkomponente (200) und
- ein auf der wenigstens einen sekundären Netzkomponente (300, 400) ablaufendes zweites Konfigurationsprogramm zum selbsttätigen Konfigurieren der sekundären Netzkomponente derart, daß die Daten der primären Netzkomponente (200) als Default-Gateway für die sekundäre Netzkomponente (300, 400) verwendet werden.

7. Anordnung nach Anspruch 7,
**dadurch gekennzeichnet, daß**
das Administrationsprogramm
- Mittel zur Eingabe von Konfigurationsdaten einer primären (200) und wenigstens einer sekundären Netzkomponente (300, 400) durch den Nutzer;
- Mittel zum Erstellen einer Config Message, welche die Konfigurationsdaten enthält, und
- Mittel zum Senden der Config Message an die primäre Netzkomponente
umfasst.

8. Anordnung nach Anspruch 8,
**gekennzeichnet durch**
ein Aufbauformat der Config Message, **durch** welches die primäre Netzkomponente (200) einerseits zum selbsttätigen Konfigurieren und andererseits zum Weiterleiten der Config Message aktiviert wird.

9. Anordnung nach einem der Ansprüche 7 bis 9,
**dadurch gekennzeichnet, daß**
die Konfigurationsdaten der Config Message die Meldungselemente
- Ethernet-Adresse der primären Netzkomponente;
- IP-Adresse der primären Netzkomponente;
- IP-Adresse der wenigstens einen sekundären Netzkomponente;
- Gemeinsame Subnetzmaske und
- Default Gateway
aufweisen.

10. Anordnung nach einem der Ansprüche 7 bis 10,
**dadurch gekennzeichnet, daß**
das erste Konfigurationsprogramm
- Mittel zum Lesen der Config Message;
- Mittel zum Erkennen der Konfigurationsdaten, welche der primären Netzkomponente (200) zugeordnet sind;
- Mittel zum Inbetriebnehmen des IP-Interfaces (201) und des wenigstens einen Proxy-Interfaces (202, 203) der primären Netzkomponente (200);
- Mittel zum Schreiben wenigstens einer Proxy-Interface-ID in die Config Message und
- Mittel zum Senden der Config Message an wenigstens eine sekundäre Netzkomponente (300, 400)
umfasst.

11. Anordnung nach einem der Ansprüche 7 bis 11,
**dadurch gekennzeichnet, daß**
das zweite Konfigurationsprogramm
- Mittel zum Lesen der Config Message;
- Mittel zum Erkennen der Konfigurationsdaten, welche der jeweiligen sekundären Netzkomponente (300, 400) zugeordnet sind; und
- Mittel zum Inbetriebnehmen des IP-Interfaces (301, 401) der jeweiligen sekundären Netzkomponente (300, 400)
umfasst.

12. Anordnung nach einem der Ansprüche 7 bis 12,
**dadurch gekennzeichnet, daß**
das Administrationsprogramm und/oder das erste Konfigurationsprogramm und/oder das zweite Konfigurationsprogramm standardisierte Konfigurationskomponenten wie RARP oder BOOTP verwendet.

## Claims

1. Method for configuring a communication interconnection for transmitting voice and/or user data, comprising
- an administration server (100) directly connected to a data network;
- a primary network component (200) with proxy characteristic, which is also directly connected to this data network, and
- at least one secondary network component (300, 400) connected indirectly to the data network via the primary network component (200),
comprising the following method steps:
a) defining a Config Message, containing the configuration parameters for a data network access of the primary and the secondary network components (200; 300, 400), as configuration IP packet on the administration server (100);
b) conveying the Config Message to the primary network component (200) with proxy characteristic;
c) independent configuring of the primary network component (200) by means of the Config Message;
d) forwarding the Config Message to at least one secondary network component (300, 400), and
e) independent configuring of the at least one secondary network component (300, 400) with respect to its access to the data network via the primary network component (200), the data of the primary network component (200) being used as default gateway for the secondary network component (300, 400).

2. Method according to Claim 1, **characterized in that** steps a) to e) are executed on the basis of expanded standard configuration components such as RARP or BOOTP.

3. Method according to Claim 1 or 2, **characterized in that**, in step b), the Config Message is conveyed to a number of primary network components (200) simultaneously to successively in time.

4. Method according to one of the preceding claims, **characterized in that** the independent configuring of the primary network component (200) in step c) exhibits the following steps:
c1) reading the configuration data out of the Config Message;
c2) recognizing the configuration data which are allocated to the primary network component (200);
c3) taking one IP interface (201) and at least one proxy interface (202, 203) into operation, and
c4) writing at least one proxy interface ID into the Config Message.

5. Method according to one of the preceding claims, **characterized in that** the independent configuring of the at least one secondary network component (300, 400) in step e) exhibits the following steps:
e1) reading the configuration data out of the Config Message;
e2) recognizing the configuration data which are allocated to the respective secondary network component (300, 400), and
e3) taking the IP interface (301, 401) into operation.

6. Arrangement for carrying out the method according to one of the preceding claims, comprising
- an administration server (100) directly connected to a data network;
- a primary network component (200) with proxy characteristic, which is also directly connected to this data network; and
- at least one secondary network component (300,400) connected indirectly to the data network via the primary network component (200),
**characterized by**
- an administration program running on the administration server (100) and interactively operable for specifying configuration data for primary (200) and secondary network components (300, 400);
- a first configuration program, running on the primary network component (200), for independent configuring of the primary network component (200) and
- a second configuration program, running on the at least one secondary network component (300, 400), for independent configuring of the secondary network component, in such a manner that the data of the primary network component (200) are used as default gateway for the secondary network component (300, 400).

7. Arrangement according to Claim 7, **characterized in that** the administration program comprises
- means for inputting configuration data of a primary (200) and at least one secondary network component (300, 400) by the user;
- means for generating a Config Message which contains the configuration data, and
- means for sending the Config Message to the primary network component.

8. Arrangement according to Claim 8, **characterized by** a configuration format of the Config Message by means of which the primary network component (200) is activated for independent configuring, on the one hand, and, on the other hand, for forwarding the Config Message.

9. Arrangement according to one of Claims 7 to 9, **characterized in that** the configuration data of the Config Message exhibit the following message elements:
- Ethernet address of the primary network component;
- IP address of the primary network component;
- IP address of the at least one secondary network component;
- common subnetwork mask and
- default gateway.

10. Arrangement according to one of Claims 7 to 10, **characterized in that** the first configuration program comprises:
- means for reading the Config Message;
- means for recognizing the configuration data which are allocated to the primary network component (200);
- means for taking the IP interface (201) and the at least one proxy interface (202, 203) of the primary network component (200) into operation;
- means for writing at least one proxy interface ID into the Config Message; and
- means for sending the Config Message to at least one secondary network component (300, 400).

11. Arrangement according to one of Claims 7 to 11, **characterized in that** the second configuration program comprises
- means for reading the Config Message;
- means for recognizing the configuration data which are allocated to the respective secondary network component (300, 400); and
- means for taking the IP interface (301, 401) of the respective secondary network component (300, 400) into operation.

12. Arrangement according to one of Claims 7 to 12, **characterized in that** the administration program and/or the first configuration program and/or the second configuration program uses standardized configuration components such as RARP or BOOTP.

## Revendications

1. Procédé pour la configuration de réseaux de communication interconnectés destinés à la transmission de données vocales et/ou de données utiles, comprenant
- un serveur d'administration (100) connecté directement à un réseau de données ;
- une composante de réseau primaire (200), à caractéristique proxy, également connectée directement à ce réseau de données, et
- au moins une composante de réseau secondaire (300, 400), connectée indirectement au réseau de données par l'intermédiaire de la composante de réseau primaire (200),
avec les étapes de procédé suivantes :
a) définition sur le serveur d'administration (100) d'un Config Message contenant les paramètres de configuration pour un accès au réseau de données des composantes de réseau primaire et secondaire (200 ; 300, 400), comme paquet IP de configuration ;
b) transmission du Config Message à la composante de réseau primaire (200) à caractéristique proxy ;
c) configuration automatique de la composante de réseau primaire (200) au moyen du Config Message ;
d) acheminement du Config Message à au moins une composante de réseau secondaire (300, 400) et
e) configuration automatique de l'au moins une composante de réseau secondaire (300, 400), en ce qui concerne son accès au réseau de données, par l'intermédiaire de la composante de réseau primaire (200), les données de la composante de réseau primaire (200) étant utilisées comme Default Gateway pour la composante de réseau secondaire (300, 400).

2. Procédé selon la revendication 1,
**caractérisé en ce que**
les étapes a) à e) sont exécutées sur la base de composantes de configuration standard, comme RARP ou BOOTP.

3. Procédé selon la revendication 1 ou 2,
**caractérisé en ce que**
à l'étape b), le Config Message est transmis à plusieurs composantes de réseau primaires (200), simultanément ou successivement dans le temps.

4. Procédé selon l'une quelconque des revendications précédentes,
**caractérisé en ce que**
la configuration automatique de la composante de réseau primaire (200) à l'étape c) présente les étapes
c1) lecture des données de configuration à partir du Config Message;
c2) reconnaissance des données de configuration affectées à la composante de réseau primaire (200) ;
c3) mise en service d'une interface IP (201) et d'au moins une interface proxy (202, 203) et
c4) écriture d'au moins une ID d'interface proxy dans le Config Message.

5. Procédé selon l'une quelconque des revendications précédentes,
**caractérisé en ce que**
la configuration automatique de l'au moins une composante de réseau secondaire (300, 400) à l'étape e) présente les étapes
e1) lecture des données de configuration à partir du Config Message;
e2) reconnaissance des données de configuration affectées à la composante de réseau secondaire respective (300, 400) et
e3) mise en service de l'interface IP (301, 401 ).

6. Dispositif pour la réalisation du procédé selon l'une quelconque des revendications précédentes, comprenant
- un serveur d'administration (100) connecté directement à un réseau de données ;
- une composante de réseau primaire (200) à caractéristique proxy, également connectée directement à ce réseau de données, et
- au moins une composante de réseau secondaire (300, 400), connectée indirectement au réseau de données par l'intermédiaire de la composante de réseau primaire (200),
**caractérisé par**
- un programme d'administration exécuté sur le serveur d'administration (100) et pouvant être commandé interactivement pour définir les données de configuration pour les composantes de réseau primaire (200) et secondaire (300, 400) ;
- un premier programme de configuration exécuté sur la composante de réseau primaire (200) pour la configuration automatique de la composante de réseau primaire (200) et
- un deuxième programme de configuration exécuté sur l'au moins une composante de réseau secondaire (300, 400) pour la configuration automatique de la composante de réseau secondaire, de telle manière que les données de la composante de réseau primaire (200) sont utilisées comme Default-Gateway pour la composante de réseau secondaire (300, 400).

7. Dispositif selon la revendication 7,
**caractérisé en ce que**
le programme d'administration comprend
- des moyens pour l'entrée par l'utilisateur de données de configuration d'une composante de réseau primaire (200) et d'au moins une composante de réseau secondaire (300, 400) ;
- des moyens pour la création d'un Config Message, lequel contient les données de configuration, et
- des moyens pour l'émission du Config Message à la composante de réseau primaire.

8. Dispositif selon la revendication 8,
**caractérisé en ce que**
un format de structure du Config Message, au moyen duquel la composante de réseau primaire (200) est activée, d'une part, pour la configuration automatique et, d'autre part, pour la transmission du Config Message.

9. Dispositif selon l'une quelconque des revendications 7 à 9,
**caractérisé en ce que**
les données de configuration du Config Message présentent les éléments de message
- adresse Ethernet de la composante de réseau primaire ; adresse IP de la composante de réseau primaire ;
- adresse IP de l'au moins une composante de réseau secondaire ;
- masque commun de sous-réseau et
- Default Gateway.

10. Dispositif selon l'une quelconque des revendications 7 à 10,
**caractérisé en ce que**
le premier programme de configuration comprend
- des moyens pour la lecture du Config Message ;
- des moyens pour reconnaître les données de configuration affectées à la composante de réseau primaire (200) ;
- des moyens pour la mise en service de l'interface IP (201) et de l'au moins une interface proxy (202, 203) de la composante de réseau primaire (200) ;
- des moyens pour l'écriture d'au moins une ID d'interface proxy dans le Config Message et
- des moyens pour l'émission du Config Message à au moins une composante de réseau secondaire (300, 400).

11. Dispositif selon l'une quelconque des revendications 7 à 11,
**caractérisé en ce que**
le deuxième programme de configuration comprend
- des moyens pour la lecture du Config Message ;
- des moyens pour reconnaître les données de configuration affectées à la composante de réseau secondaire respective (300, 400) ; et
- des moyens pour la mise en service de l'interface IP (301, 401) de la composante de réseau secondaire respective (300, 400).

12. Dispositif selon l'une quelconque des revendications 7 à 12,
**caractérisé en ce que**
le programme d'administration et/ou le premier programme de configuration et/ou le deuxième programme de configuration utilisent des composantes de configuration standard, comme RARP ou BOOTP.
